# EUROPEAN PATENT APPLICATION

(11) **EP 3 306 835 A1**
(43) Date of publication of application: **11.04.2018**
(21) Application number: 16306301.9
(22) Date of filing: 04.10.2016
(51) Int. Cl.: H04B 10/50, H04B 10/564, H04J 14/02

(54) **NOISE LOADING FOR UNDERSEA SYSTEMS USING WAVELENGTH SELECTIVE SWITCHING**

(71) Applicant: ALCATEL LUCENT, 92100 Boulogne-Billancourt (FR)
(72) Inventor: CHARLET, Gabriel, 91620 Nozay (FR); ANTONA, Jean-Christophe, 91620 Nozay (FR)
(74) Representative: Novagraaf Technologies

(57) **Abstract**

The present invention relates to a system (100, 200, 300, 400) for noise loading , an associated WDM terminal (1100, 1200, 1300, 1400) and a process for sequential lighting of fibers in an undersea communications system. The noise loading system comprises:
- a first optical amplifier (110) adapted to generate a wide band Amplified Spontaneous Emission - ASE - noise,
- a Wavelength Selective Switch arrangement (130) comprising a Wavelength Selective Switch - WSS - (131) having an input connected to the output of the first optical amplifier (110) and at least an output; and
- a second optical amplifier (120) adapted to boost the output signal of the first WSS (131) which is adapted to filter the ASE noise generated at a determined wavelength.

## Description

### Field of the Invention

The present invention relates to a noise loading system for undersea system and associated apparatus using the noise loading system.

### Background

Amplification Spontaneous Emission (ASE) noise loading is required for undersea system as optical amplifier in the submarine line operate at constant output power. Noise loading is used when channel count is below the maximum channel count of the systems. A fully reconfigurable noise loading system is required to minimize manual configuration.

The cost of such equippement being quite high, it is important to reuse components used in other parts of a submarine terminal to operate such reconfiguration.

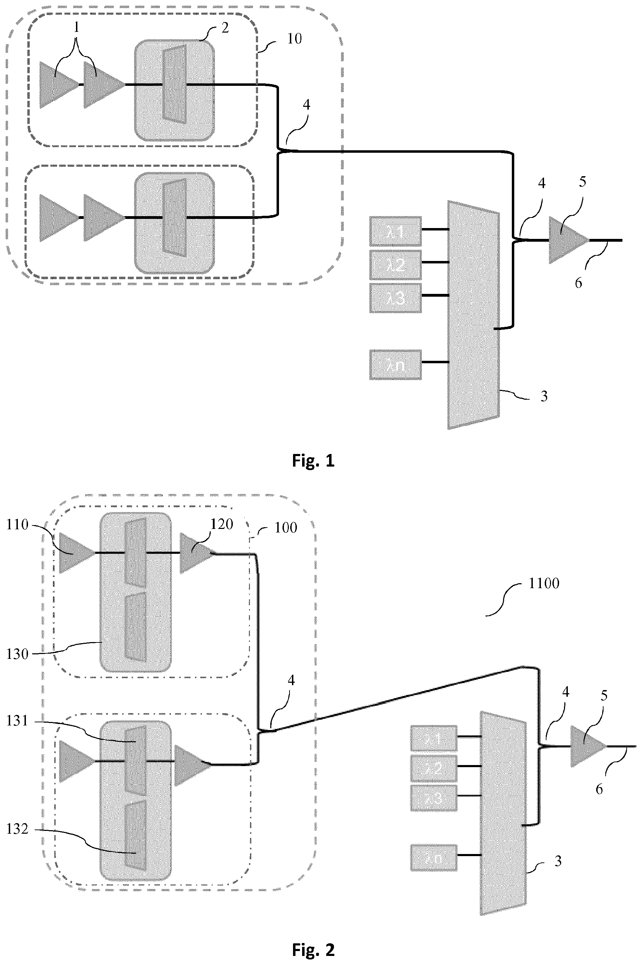

Currently, loading systems are designed to provide noise loading typically only for one fiber of a submarine cable as shown in Figure 1.

The ASE noise loading system 10 is composed of two Erbium Doped Fiber Amplifiers (EDFA) 1, placed one after the other, to generate wide band ASE noise and then a wavelength blocker 2 to suppress ASE noise where channel wavelength will be inserted. In this example, the filtered ASE noise signal is coupled with the output of a Wavelength Division Multiplexing (WDM) terminal 3, with a 3dB coupler 4, before entering into an optical amplifier 5 to amplify the signal before entering into a submarine fiber 6.

In order to reach the required reliability level, the ASE noise loading system 10 is duplicated and the two filtered ASE noise signals are coupled with a 3dB coupler 4 before being inserted into the submarin fiber 6.

The extinction ratio of the wavelength blocker 2 should be sufficiently large to avoid inducing penalty on the transmission systems.

Typically submarine fiber count is four and can typically vary between two and eight.

The cost of duplicating the noise loading system for all fiber pairs is thus high.

So there is a need for a low cost and easy to reconfigurate noise loading system for undersea systems.

### Summary

Embodiments of the present invention propose a system for loading noise in an undersea communications system to solve the prior art drawbacks.

According to a first system embodiment a noise loading system for undersea communications system is proposed comprising:
- a first optical amplifier adapted to generate a wide band Amplified Spontaneous Emission - ASE - noise,
- a Wavelength Selective Switch arrangement comprising a first Wavelength Selective Switch - WSS - having an input connected to the output of the first optical amplifier and at least an output; and
- a second optical amplifier adapted to boost an output signal of the first WSS which is adapted to filter the ASE noise generated at a determined wavelength.

Advantageously, the WSS arrangement comprises a second WSS having an input and at least an output.

In a second system embodiment, the noise loading system for undersea system comprises the same elements than the first embodiment wherein the output of the second optical amplifier is linked to the input of the second Wavelength Selective Switch (WSS) adapted to filter the ASE at the same determined wavelength

In a third system embodiment compatible with the first one, the noise loading system for undersea system further comprises a third optical amplifier adapted to boost the output of the second Wavelength Selective Switch (WSS), and wherein the output of the first optical amplifier is split in two signals by a 3 dB coupler, the first signal being linked to the input of the first WSS adapted to filter the Amplified Spontaneous Emission (ASE) at a determined wavelength (λₙ₁), and the second signal being linked to the input of the second WSS adapted to filter the ASE at another determined wavelength (λₙ₂).

Advantageously, each WSS is adapted to filter at least two different wavelengths (respectively: λₙ₁ and λₙ₂ for the first WSS, and λₙ₃ and λₙ₄ for the second WSS), each filtered signal being sent to an optical amplifier, the noise loading system being adapted to generate up to four signals having four different wavelengths (λₙ₁, λₙ₂, λₙ₃, λₙ₄).

Advantageously, the noise loading system comprises a further noise loading system as one previously described. In the case of the second embodiment, the output signal of the second Wavelength Selective Switches (WSSs) are combined by a 3dB coupler. In the case of the third system embodiment, respective output signals of the optical amplifiers having the same wavelengths are combined by 3dB coupler (respectively λₙ₁/λₙ₁ and λₙ₂/ λₙ₂ or λₙ₁/ λₙ₁, λₙ₂/ λₙ₂, λₙ₃/ λₙ₃ and λₙ₄/ λₙ₄).

Advantageously, the optical amplifiers used in the previous embodiments are Erbium Doped Fiber Amplifiers.

Further embodiments of the present invention propose a Wavelength Division Multiplexing (WDM) terminal for undersea communications system comprising, in a first terminal embodiment:
- at least one Wavelength Selective Switch (WSS) adapted to multiplex channels including optical signals containing information to be transmitted;
- at least one noise loading system, such as the one described in the first or in the second system embodiment or their variants, adapted to generate a noise loading signal having a wavelength different from the wavelength of the optical signals containing the information to be transmitted; and
- a 3dB coupler adapted to combine the multiplexed signal and the noise loading signal generated by the noise loading system together.

In a second terminal embodiment, the WDM terminal for undersea communications system comprises:
- at least one Wavelength Selective Switch (WSS) adapted to multiplex channels including the optical signals containing the information to be transmitted; and
- at least one noise loading system such as the one described in the third system embodiment or its variants adapted to generate a noise loading signal having a wavelength different from the wavelength of the optical signals containing the information to be transmitted; and
- the WSS being adapted to combine the optical signals and the noise loading signal generated accordingly by the noise loading system (300 or 400) together.

Advantageously, the WDM terminals previously described, further comprise an optical amplifier adapted to amplify the multiplexed signal containing the optical signals and the noise loading signal.

Still further embodiments of the present invention also propose a process for sequential lighting of fibers in an undersea communications system, using the noise loading system adapted to generate up to four signals having four different wavelengths, and comprising:
- lighting on one or two fibers (170 or 171) by enabling noise loading only between a minimum number of fibers; then
- progressively lighting on further fibers (171, 172 or 173) when the channel counts on said one or two fibers (170 and/or 171) are increased and the spectrum of the noise loading is reduced.

### Brief Description of the Drawings

Some embodiments of apparatus in accordance with embodiments of the present invention are now described, by way of example only, and with reference to the accompagnying drawings, in which :
- The Figure 1 schematically illustrates a known noise loading system used by persons skilled in the art.
- The Figure 2 schematically illustrates a first noise loading system embodiment and associated terminal embodiment;
- The Figure 3 schematically illustrates a second noise loading system embodiment and associated terminal embodiment;
- The Figure 4 schematically illustrates a third noise loading system embodiment and associated terminal embodiment;
- The Figure 5 schematically illustrates a fourth noise loading system embodiment and associated terminal embodiment;
- The Figure 6 schematically illustrates a function of channel loading spectrum ; and
- The Figure 7 schematically illustrates another function of channel loading spectrum.

### Description of Embodiments

Throughout the rest of the description, the term "wavelength" is interpreted as a range of wavelength and can correspond to a narrow or wide band wavelength. Furthermore, the term "signal" is to be understood to refer to optical signal.

### Noise Loading System Embodiments

As described before, Figure 1 shows a known noise loading system 10. This noise loading system 10 comprises two Erbium Doped Fiber Amplifier (EDFA) 1, placed one after the other to generate wide band Amplified Spontaneous Emission (ASE) noise, and then a wavelength blocker 2 to suppress ASE noise where channel wavelength, carrying the information to be transmitted, will be inserted before entering into a submarine fiber 6.

In a first exemplary general system embodiment, a noise loading system 100, schematically illustrated in Figure 2, comprises:
- two optical amplifiers 110 and 120; and
- a Wavelength Selective Switch (WSS) arrangement 130 comprising a first WSS 131 having an input and at least an output.

The WSS arrangement 130 can particularly be a twin WSS comprising a second WSS 132 set in parallel with the first WSS 131. This second WSS 132 has an input and at least an output and shares, with the first WSS 131, the same LCOS matrix.

The first optical amplifier 110 is adapted to generate a wide band ASE noise and its output is linked to the input of the first WSS 131 adapted to suppress ASE wavelength where channels, carrying the information to be transmitted and having different wavelengths, will be inserted before entering into a submarine fiber 6 of an undersea system. So the first WSS 131 filters a more or less wide wavelength range of the ASE noise generated signal.

It is to be noted that WSSs have generally an extinction ratio smaller than wavelength blockers (WBs). However, WBs have one input and one output while WSSs have one input and N outputs, or vice versa N intputs and one output (the number N currently may vary between 4, 9 and 20). WSSs are costly element (the cost increasing with the number N) but twin WSS offers a less expensive solution by sharing one Liquid Crystal On Silicon (LCOS) matrix for the two WSS. Generally, twin WSS are twin 2x40 with a total of two inputs one for each WSS and 20 output ports by WSS. Furthermore, LCOS matrix has the advantage of permitting dynamic control of channel centre frequency and bandwidth through on-the-fly modification of the pixel arrays via embedded software. In comparison, WSSs based on MEMs technology offer 100 channels of 50GHz wide (so a total of 5THz band), while WSSs based on LCOS technology are more flexible and permit to select the width of each channels (ex. : 37.5GHz, 50GHz, 62.5GHz, 400GHz, etc.) in steps of 12.5GHz or 6.25GHz depending on the model.

The filtered ASE noise signal, exiting from the first WSS 131, is then amplified by the second optical amplifier 120. The power of the filtered noise signal is preferably high enough to be combined with the channels carrying the information to be transmitted, as the submarine line is operating at constant output power. With such a system requiring the same power (by GHz) between the noise signal and channels, a low power noise signal would require to lower the channels or signal power which would degrade the channels performance. This would result in a decrease in the signal to noise ratio after amplification by an optical amplifier.

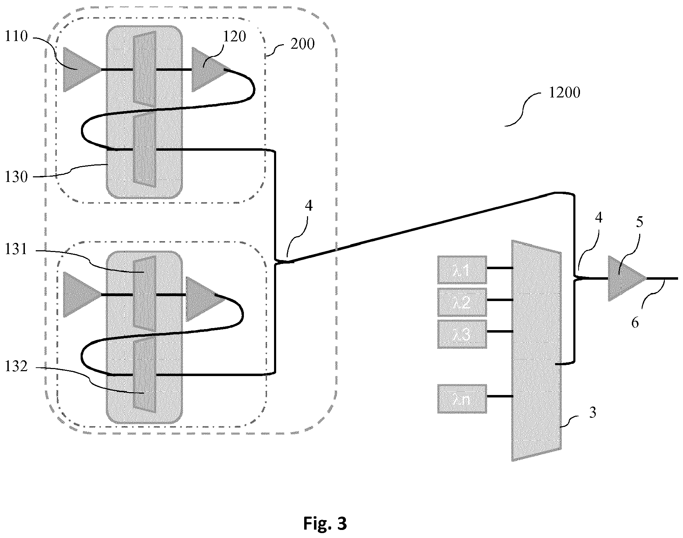

In a second exemplary system embodiment, the noise loading system 200, schematically illustrated in Figure 3, comprises the same elements and the same architecture as the noise loading system 100 except that the output signal of the second optical amplifier 120 is injected into the second WSS 132, adapted to suppress ASE wavelength where channels, carrying the information to be transmitted and having different wavelengths, will be inserted before entering into a submarine fiber 6. So the second WSS 132 is adapted to filter the same wavelength range as the first WSS 131.

This second system embodiment enables to improve the extinction ratio of the noise source.

To improve the reliability, the noise loading systems 100 and 200 can be duplicated as shown in Figures 2 and 3. In this case, their output filtered noise signals are coupled by a 3dB coupler 4 before being inserted into the submarine fiber 6.

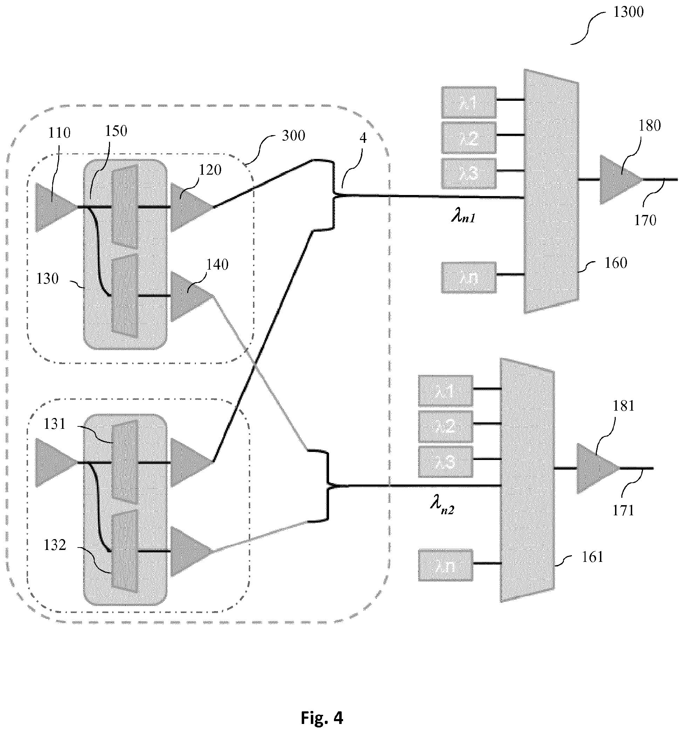

In a third exemplary system embodiment, the noise loading system 300, schematically illustrated in Figure 4, comprises the same elements as the noise loading system 100, and further comprises a third optical amplifier 140 and a 3dB coupler 150.

As previously decribed, the first optical amplifier 110 generates a wideband ASE noise. This signal is then split in two substantially identical signals by a 3dB coupler 150.

One part of the split signal is sent to the first WSS 131 adapted to suppress ASE wavelength where channels, carrying the information to be transmitted and having different wavelengths, will be inserted by a first WDM multiplexer 160 before entering into a first submarine fiber 170.The first filtered noise signal, having a wavelength λₙ₁, is amplified by the optical amplifier 120.

Similarly, the other part of the split signal is sent to the second WSS 132 adapted to suppress ASE wavelength where channels, carrying the information to be transmitted and having different wavelengths will be inserted by a second WDM multiplexer 161 before entering into a second submarine fiber 171. The second filtered noise signal obtained, having a wavelength λₙ₂, is amplified by the third optical amplifier 140.

Preferably, the WDM multiplexers 160 and 161 are WSS which in addition to multiplexing the different signal are also used to filter again the ASE noise signal and so increase the extinction ratio of the ASE noise signal.

This third system embodiment enables to generate two noise signals having two different wavelengths λₙ₁ and λₙ₂ and which can be injected into two different fibers with quite few components :
- one twin WSS 130 (or two, depending if the noise loading system 300 is duplicated to improve the reliability); and
- three optical amplifiers 110, 120 and 140 (or six for the same reasons).

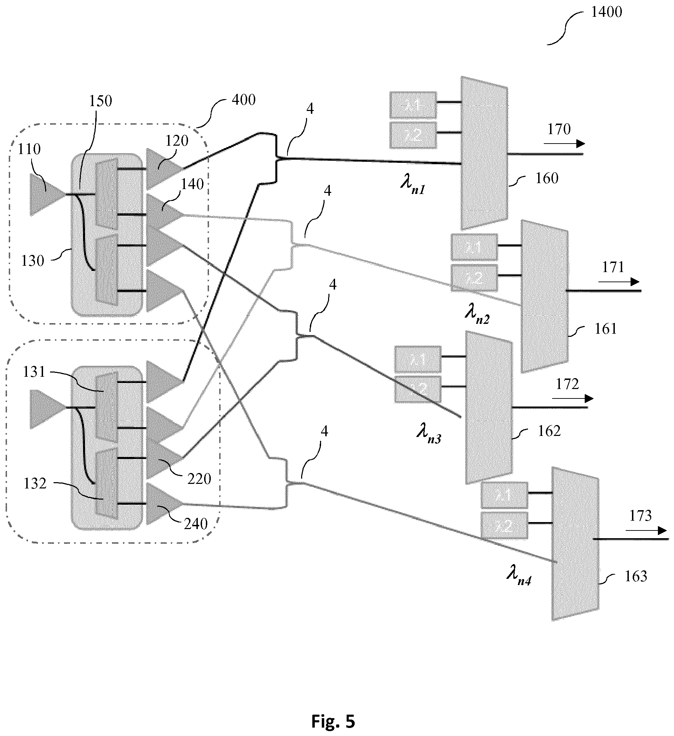

In a fourth exemplary system embodiment, the noise loading system 400, schematically illustrated in Figure 5, is able to generate four different noise signals for four submarine fibers 170, 171, 172 and 173, with the same components and some more.

To realise such an embodiment, a second output of each WSS 131, and 132 is used. The first optical amplifier 110 generates a wideband ASE noise. This signal is then split in two substantially identical signals by a 3dB coupler 150, one entering into the first WSS 131 and the other into the second WSS 132.

The first WSS 131 is adapted to suppress ASE wavelength where channels, carrying the information to be transmitted and having different wavelengths, will be inserted into two different submarine fibers 170 and 171. So, its first output delivers a first filtered noise loading signal having a wavelength λₙ₁, and its second output delivers a second filtered noise loading signal having a wavelength λₙ₂.

In the same way, the second WSS 132 is adapted to suppress ASE wavelength where channels, carrying the information to be transmitted and having different wavelengths, will be inserted into two different submarine fibers 172 and 173. So, the first output of the second WSS 132 delivers a first filtered noise loading signal having a wavelength λₙ₃, and the second output of the second WSS 132 delivers a second filtered noise loading signal having a wavelength λₙ₄.

Depending on the channel wavelengths carrying the information to be transmitted by the undersea system, the wavelength λₙ₁, λ_{n2,} λ_{n3,} λₙ₄ can be equal, or different. The noise loading system 400 can generate up to four signals having four different wavelengths (λ_{n1,} λₙ₂, λₙ₃, λₙ₄).

After exiting the WSS 131 and 132, each signals is amplified by an optical amplifier: 120 for the λₙ₁ noise signal, 140 for the λₙ₂ noise signal, 220 for the λₙ₃ noise signal and 240 for the λₙ₄ noise signal.

To improve the reliability, the noise loading systems 300 and 400 can be duplicated as shown in Figures 4 and 5. In this case, the output filtered noise signals having the same wavelength are combined by a 3dB coupler 4 before being inserted into the corresponding submarine fiber in the same manner as described before.

The WSSs of a standard twin WSS each having up to twenty outputs but the submarine fiber counting typically being up to eight, the principle of the noise loading system previously described can be generalized to a system embodiment able to generate up to eight filtered noise signals, each can have a different wavelength.

### Wavelength Division Multiplexing (WDM) Terminal Embodiments

Some embodiments of invention relate to a Wavelength Division Multiplexing (WDM) terminal for undersea communications system comprising one (or two for better reliability) noise loading system such as the ones described above with reference to figures 2-5, and one or more WDM multiplexers, preferably WSS, adapted to multiplex the optical signal containing the information to be transmitted.

Figures 2-5 present different embodiments of WDM terminals.

In a first terminal embodiment, the WDM terminal 1100 illustrated in Figure 2 comprises:
- two noise loading systems 100 set in parallel and combined at their output by a 3dB coupler 4 for better reliability;
- a WDM multiplexer 3 adapted to multiplex the channels containing the information to be transmitted together;
- a 3dB coupler 4 which couples the multpixed signal exiting the WDM multiplexer 3 with the filtered noise signal generated by the noise loading systems 100,
the noise loading system 100 being adapted to filter the noise signal generated by the first optical amplifier 110 accordingly to the channels containing the information, as described above.

In order not to disturb the transmission of the information, the noise signal provided by the noise loading system 100 must not have common wavelength with the channels containing the information.

In a second terminal embodiment, the WDM terminal 1200 illustrated in Figure 3 has the same architecture as the first terminal embodiment except that the noise loading systems 100 are replaced by noise loading systems 200.

Advantageously, the WDM terminals 1100 and 1200 further comprise:
an optical amplifier 5 which amplifies the signal containing the information coupled with the noise signal provided by the noise loading system, and injects it into a submarine fiber 6 of an undersea system.

In a third terminal embodiment, the WDM terminal 1300 illustrated in Figure 4 is able to function with two submarine fibers 170 and 171.

To realise this, the WDM terminal 1300 comprises :
- a duplicated noise loading system 300 generating two noise signals, one at λₙ₁, and one at λₙ₂;
- two WDM multiplexers 160 and 161 adapted to multiplex the channels containing the information to be transmitted with one of the noise signal received from the duplicated noise loading system 300, respectively the noise signal λₙ₁ is multiplexed by the WDM multiplexer 160 and the noise signal λₙ₂ is multiplexed by the WDM multiplexer 161.

The signal multiplexed by the WDM multiplexer 160 is then sent to the submarine fiber 170 and the signal multiplexed by the WDM multiplexer 161 is sent to the submarine fiber 171.

In a fourth terminal embodiment, the principle previously described is generalised to function with four submarine fibers 170, 171, 172 and 173. The WDM terminal 1400, illustrated in Figure 5, comprises a duplicated noise loading system 400 generating four noise signals, having respectively the wavelength λₙ₁, λₙ₂, λₙ₃ and λₙ₄. Each noise signal is then multiplexed with channels containing the information to be transmitted by a WDM multiplexer, respectively 160 for λₙ₁ signal, 161 for λₙ₂ signal, 162 for λₙ₃ signal and 163 for λₙ₄ signal, before being injected into the corresponding submarine fiber, respectively 170, 171, 172 and 173.

In the same manner, this principle can be generalized to obtain a WDM terminal adapted to function with eight submarine fibers which is the number of fibers that a submarine cable typically comprises.

Advantageously, the WDM terminal can also comprise an optical amplifier linked to the WDM multiplexer output (for example the optical amplifiers 5,180 and 181 in Figures 2-4), so that the multiplexed signal, containing the information to be transmitted and a noise signal generated by a noise loading system previously described, is amplified before entering into the submarine fiber (respectively 6, 170 and 171 in Figures 2-4) to compensate the optical losses due to the propagation.

Advantageously, the optical amplifiers used in the noise loading system or in the WDM terminal are Erbium Doped Fiber Amplifier (EDFA).

### Process Embodiments

The invention also relates to a sequential lightening of fibers process for undersea communications system using the noise loading system described the WDM terminal described in the fourth terminal embodiment.

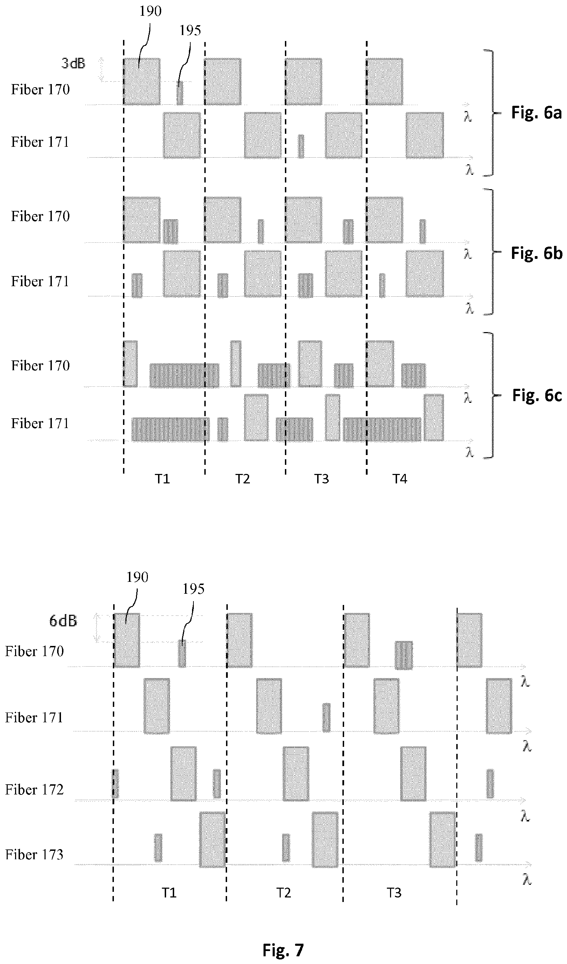

In a first step, the submarine fibers 170 and 171 are lit by activating the first optical amplifier 110 generating a wide band Amplification Spontaneous Emission (ASE) noise. The noise loading system 400 generates two ASE spectrums 190 by filtering two different wavelength range of the ASE noise, one allocated to the fiber 170 and the other to the fiber 171 as illustrated in Figures 6a-6c which represents a channel loading spectrum.

The WDM multiplexer used to multiplex the signals before entering into the fiber is a WSS, yet, one wavelength selected for port 1 of a WSS cannot be simultaneously sent on port 2. So, when very low number of channel 195 are sent into the line as shown in Figure 6a, ASE loading is done by subband: Odd subband for fiber 170 and even subband for fiber 171.

As ASE spectrum 190 use only half of the whole spectrum, ASE power has to be around 3dB more powerful than channel 195 power (by unit of spectrum). Indeed, as previously described, the goal of noise loading is to inject preferably the same power in the submarine line. If the spectrum is fully loaded, the noise power (per GHz) should be the same as the signal power (per GHz). With very low channel count, the noise power (per GHz) should be at a given level if noise is sent over all spectrum. If noise is sent over half of the spectrum (when noise loading is shared over two submarine lines), the power per GHz should be doubled (i.e. +3dB). The same reasoning can be applied with four fibers as shown in Figure 7.

When channel 195 count within the fiber is increased as shown in Figures 6b and 6c, the width of ASE spectrum 190 band is progressively reduced.

When a significant channel 195 count is reached as in Figure 6c, a new fiber is lit, the fiber 182 and then the fiber 183 as shown in Figure 7.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A system (100) for loading noise in an undersea communications system comprising:
- a first optical amplifier (110) adapted to generate a wide band Amplified Spontaneous Emission -ASE- noise;
- a Wavelength Selective Switch arrangement (130) comprising a first Wavelength Selective Switch - WSS - (131) having an input connected to the output of the first optical amplifier (110) and at least an output; and
- a second optical amplifier (120) adapted to boost an output signal of the first WSS (131) which is adapted to filter the ASE noise generated at a determined wavelength.

2. A noise loading system (100) as claimed in claim 1 wherein the Wavelength Selective Switch arrangement (130) comprises a second Wavelength Selective Switch - WSS - (132) having an input and at least an output.

3. A noise loading system (200) as claimed in claim 2 wherein the output of the second optical amplifier (120) is linked to the input of the second Wavelength Selective Switch (WSS) (132) adapted to filter the ASE at the same determined wavelength.

4. A noise loading system (300) as claimed in claim 2 further comprising a third optical amplifier (140) adapted to boost the output of the second Wavelength Selective Switch (WSS) (132), and wherein the output of the first optical amplifier (110) is split in two signals by a 3 dB coupler (150), the first signal being linked to the input of the first WSS (131) adapted to filter the Amplified Spontaneous Emission (ASE) at a determined wavelength (λₙ₁), and the second signal being linked to the input of the second WSS (132) adapted to filter the ASE at another determined wavelength (λₙ₂).

5. A noise loading system (400) as claimed in claim 4 wherein each WSS (131, 132) is adapted to filter at least two different wavelengths (respectively: λₙ₁ and λₙ₂ for 131, and λₙ₃ and λₙ₄ for 132), each filtered signal being sent to an optical amplifier (120, 140, 220, 240), the noise loading system (400) being adapted to generate up to four signals having four different wavelengths (λₙ₁, λₙ₂, λₙ₃, λₙ₄).

6. The noise loading system (200) of claim 3 comprising a further noise loading system (200) as claimed in any one of the claims 1 to 3 and wherein the output signal of the second Wavelength Selective Switches (WSSs) (132) are combined by a 3dB coupler (4).

7. The noise loading system of claim 4 or 5 (respectively 300 or 400) comprising a further noise loading system (respectively 300 or 400) as claimed in any one of the claims 1 to 5 and wherein respective output signals of the optical amplifiers (respectively 120 and 140 or 120, 140, 220 and 240) having the same wavelengths are combined by 3dB coupler (4) (respectively λₙ₁/λₙ₁ and λₙ₂/λₙ₂ or λₙ₁/λₙ₁, Xₙ₂/λₙ₂, λₙ₃/λₙ₃ and λₙ₄/λₙ₄).

8. The noise loading system of one of the claims 1 to 7 (100, 200, 300 or 400) wherein the optical amplifiers (110, 120, 140, 220, 240) are Erbium Doped Fiber Amplifiers (EDFA).

9. A Wavelength Division Multiplexing (WDM) terminal (1100, 1200) for undersea communications system comprising:
- at least one Wavelength Selective Switch (WSS) (3) adapted to multiplex channels including optical signals containing information to be transmitted;
- at least one noise loading system (100, 200) as claimed in any one of the preceding claims adapted to generate a noise loading signal having a wavelength different from the wavelength of the optical signals containing the information to be transmitted; and
- a 3dB coupler adapted to combine the multiplexed signal and the noise loading signal generated by the noise loading system (100, 200) together.

10. A Wavelength Division Multiplexing (WDM) terminal (1300, 1400) for undersea communications system comprising:
- at least one Wavelength Selective Switch (WSS) (160, 161, 162, 163) adapted to multiplex channels including the optical signals containing the information to be transmitted; and
- at least one noise loading system (300 or 400) as claimed in any one of the preceding claims adapted to generate a noise loading signal having a wavelength different from the wavelength of the optical signals containing the information to be transmitted; and
the WSS being adapted to combine the optical signals and the noise loading signal generated accordingly by the noise loading system (300 or 400) together.

11. The Wavelength Division Multiplexing (WDM) terminal (1100, 1200, 1300, 1400) as claimed in claim 9 or 10 further comprising an optical amplifier (5, 180, 181) adapted to amplify the multiplexed signal containing the optical signals and the noise loading signal.

12. A process for sequential lighting of fibers in an undersea communications system using the noise loading system of claim 5 (400), comprising:
- lighting on one or two fibers (170 or 171) by enabling noise loading only between a minimum number of fibers;
- progressively lighting on further fibers (171, 172 or 173) when the channel counts on said one or two fibers (170 and/or 171) are increased and the spectrum of the noise loading is reduced.
